Europäisches Patentamt

European Patent Office

Office européen des brevets

(19)

(11) Publication number: **0 191 558**
A1

# EUROPEAN PATENT APPLICATION

(21) Application number: 86300397.6

(22) Date of filing: 21.01.86

(51) Int. Cl.⁴: **C 09 K 7/02**

(30) Priority: 24.01.85 US 695129

(43) Date of publication of application: 20.08.86
Bulletin 86/34

(84) Designated Contracting States: AT DE FR GB IT NL SE

(71) Applicant: HALLIBURTON COMPANY, P.O. Drawer 1431,
Duncan Oklahoma 73536 (US)

(72) Inventor: Collins, Michael B., 7007 Canyon Way, Houston
Texas 77086 (US)
Inventor: Osterloh. Mary Elizabeth, 3515 Rolling Green,
Missouri City Texas 77459 (US)
Inventor: Dimatteo, John Victor, 8714 Troulon Drive,
Houston Texas 77036 (US)

(74) Representative: Wain, Christopher Paul et al, A.A.
THORNTON & CO. Northumberland House 303-306 High
Holborn, London WC1V 7LE (GB)

(54) **Control of viscosity of aqueous drilling fluids.**

(57) A derivatized humate is used to control the viscosity of aqueous drilling fluids. It imparts high temperature stability to the drilling fluid when the fluid is exposed to elevated temperatures, and it provides filtrate fluid loss control. The humate is that found in association with certain titanium mineral deposits, and it is derivatized by reaction with a solubilizable source of chromium ions in the presence of a solubilizing agent, whereby a chromium complex is formed. The reaction can be effected over a wide pH range and a pH of about 6 to about 9 is preferred.

EP 0 191 558 A1

ACTORUM AG

0191558

- 1 -

CONTROL OF VISCOSITY OF AQUEOUS DRILLING FLUIDS

The present invention relates to a method of controlling the viscosity of an aqueous drilling fluid using certain derivatized humates, and to a method of making the derivatized humates.

In drilling wells into subterranean formations, drilling fluids are circulated past a rotary drill bit to remove rock cuttings, lubricate the drill bit and seal the well bore to provide fluid loss control. In deep well bores, relatively high formation temperatures of from about 300°F to about 450°F (149 to 232°C) and higher are encountered. These high temperature formations generally cause aqueous drilling fluids to thicken as a result of temperature instability. Thickening of the drilling fluid impedes pumping of the fluid through the well bore and substantially increases the pumping pressures required to circulate the fluid. If, for some reason, drilling operations must be temporarily suspended such as for example during changing of a drill bit, and the drilling fluid is left in a static condition within the well bore, the fluid can thicken such that recirculation cannot be initiated. This high temperature instability thickening of aqueous drilling fluids often is aggravated by the presence of fluid contaminants such as, for example, salt, gypsum, cement, divalent cations from the formation such magnesium and calcium, and anions such as carbonates, sulfates, chlorides and the like.

Heretofore, a wide variety of drilling fluid additives have been proposed to stabilize or reduce the viscosity of aqueous drilling fluids. Included in this list are additives such as humates and lignitic materials. Commercially, leonardite has been used to stabilize and thin drilling fluids. Leonardite imparts increased temperature stability to aqueous drilling fluids particularly if the fluid is thinned with a lignosulfonate additive.

Ther term "leonardite" means a coal-like substance similar in structure and composition to lignite. It has been considered to be a naturally oxidized lignite. Leonardite is a specific organic material named after A.G. Leonard who was associated with its identification. Leonardite is primarily mined from the Harmon bed of Bowman County and Divide County in North Dakota, U.S.A. and in and around Alpine, Texas, U.S.A The significant elemental difference between leonardite and lignite is the oxygen content. Leonardite has an oxygen content on the order of 28 to 29%, whereas lignite has a much lower oxygen content of from 19 to 20%, on an ash and moisture-free basis. Unfortunately, in common use, leonardite has been often times called a lignite. Thus, those skilled in the drilling arts often describe a viscosity lowering additive as "mined lignin" or lignite" when they actually mean "leonardite". Leonardite is preferred over lignite as a viscosity reducing agent in aqueous drilling fluids because of its higher oxygen content and the functional advantages which are apparently related to the higher oxygen content.

U.S. Patents Nos. 4,235,727 and 4,311,600 relate to the use of particular humates as thinners for drilling fluids which are found in association with certain titanium mineral deposits. These patents show that a humate having a unique compositional make-up, which was different from that of leonardite, would under some conditions impart greater stability to an aqueous drilling fluid than would leonardite.

While such materials have found utility as additives for drilling fluids utilized at temperatures up to about 300°F (149°C), such materials have a significantly reduced effectiveness at higher temperatures. We have now developed an additive to impart temperature stability and viscosity reduction to an aqueous drilling fluid maintained at elevated temperatures such as in excess of about 300°F (149°C) as well as at lower temperatures, and exhibit tolerance to high levels of contamination.

The invention is based on the surprising discovery that a certain derivatized humate, formed from humate found in association with certain titanium mineral deposits, will function as an additive in an aqueous drilling fluid to control the viscosity of the fluid, impart high temperature stability to the fluid and provide filtrate fluid loss control. In particular, the derivatized humate is formed by reacting the humate with a solubilizable source of chromium ions, such as sodium dichromate, whereby a derivatized chromium complex is formed. The reaction can be effected at temperatures of from about ambient to above the atmospheric boiling temperature of the solubilizing agent. The reaction can be effected at substantially any pH, but neutral to slightly alkaline conditions have been found to impart certain advantages as will be described more fully hereinafter.

The viscosity of an aqueous drilling fluid can thus be reduced or controlled by dispersing therein a quantity of the derivatized humate sufficient to achieve the desired viscosity effect. Also, filtrate fluid loss

- 4 -

0191558

control can be achieved by dispersing a fluid loss controlling proportion of the derivatized humate in the aqueous drilling fluid.

Aqueous drilling fluids or muds are well-known aqueous suspensions commonly referred to as "drilling muds" or more simply as "muds". Depending on the salinity of the water phase, they may be further described as "fresh water muds" or "salt water muds". The suspended solids portions of the fluids are primarily clays and barite. Contaminants such as drilled solids, anhydrite, gypsum, dolomite, limestone, sand and salts also may be present. Hydrophilic chemicals, in either solid or liquid form, may be added to adjust and control viscosity, gelation, lubrication, filtration, corrosion, contamination, water loss, and the like. Portions of oils such as petroleum distillates and other hydrophobic chemicals also may be added to impart desirable properties to the drilling mud. Desirably, to promote pumpability and flow characteristics, the viscosity of the drilling fluid is held to near the minimum consistent with suspending the weighting agents, cleaning the hole and maintaining well bore stability. Viscosity reduction or "thinning" can occur by reducing the apparent viscosity, the plastic viscosity, the yield point, the rate and degree of gelation or any combination of these factors. In the present invention, viscosity and fluid flow properties are altered to or maintained at desired values by the addition of a particular derivatized humate, with consequent advantages of better fluid stability and fluid flow properties at high fluid temperatures. Many of the known aqueous drilling fluids may be thinned advantageously by the method of the invention.

The humates employed in the invention are naturally occurring compositions of matter found in

- 5 -

0191558

association with titanium mineral deposits such as rutile sand deposits. Rutile sand deposits are found in several places throughout the world. In the United States, rutile sand deposits are located in Florida, Georgia and South Carolina. The rutile sands are in a formation commonly referred to as "hard pan". The hard pan comprises rutile sands bound together by a coating of humate. It is this humate which is employed in the present invention.

The term "humate" as used herein refers to the products of natural flocculation or precipitation in sand deposits, of humic substances that were derived from natural leaching of decaying plant and animal material (humus). The humate employed in the method and compositions of the invention is generally found in association with titanium mineral deposits and contains humic substances or acids which may contribute to the reduction of the viscosity of drilling muds.

When we refer to a humate in association with or associated with, titanium mineral deposits, we mean a humate initially found in association with titanium mineral deposits and at least partially separated therefrom for use in the method of the present invention. Titanium mineral deposits include for example, ilmenite and rutile sand deposits.

The term "humic acid" has been widely applied to acidic solids obtained from plant decomposition. More recently, humic acids have been regarded as the intermediate product or products in the conversion of lignin and other plant materials to hard coal. It is believed that, in the decomposition of vegetable matter, that portion of the cell wall material consisting largely of lignin is converted into humus. In time, the humus may be converted progressively to peat, brown coal, bituminous coal and finally into anthracite. More usually,

- 6 -

0191558

"humic substance" is applied as a generic term for the organic acids derived from humus or the top layer of the soil, containing organic decomposition products of vegetation and animal organisms in admixture with inorganic compounds, sands, minerals, metal hydroxide bases, and the like. The chemical structure of the humic acids has not been established, but they are believed to be large, condensed ring, polymer-like molecules containing pendant carboxylic and phenolic groups.

The desired humate may be separated from the rutile sand deposits by first breaking up the deposit or formation of hard pan into a ground ore of a convenient size for handling. Much of the humate in the ground ore can be washed off with water to effect the desired separation. Additional humate can be obtained by washing the concentrated ore with aqueous sodium hydroxide. The aqueous mixture containing the free humates may be treated with, for example, a strong mineral acid such as sulfuric acid or alum to regain the natural pH of the humate and facilitate settling out of the suspended humate.

The humate is unique compositionally and differs significantly from leonardite in compositional make-up as indicated in U.S. Patents Nos. 4,235,727 and 4,311,600, to which reference should be made for further details.

In general, the humates employed in the method of the present invention preferably have compositional make-ups which provide a carbon to hydrogen ratio (weight to weight) of from about 9.5 to about 17.5:1.0; a carbon to oxygen ratio of about 1.0 to about 2.3:1.0; an aluminum content of about 2.8 to about 8.4 percent by weight, a titanium content of about 0.5 to about 3.5 percent by weight and a calcium content of less than about 0.5 percent by weight.

In order to make the derivative, the separated humate which generally comprises a slurry or sludge-like mixture containing from about 10 to about 40 percent humate solids, is introduced into a reaction vessel wherein a solubilizing agent is also introduced in an amount sufficient to form a mixable slurry with the humate. The solubilizing agent advantageously comprises water, but substantially any other fluid which does not adversely react with the humate, and is capable of solubilizing the source of chromate ions may be utilized.

A source of solubilizable chromium ions then is introduced into the reaction vessel to contact and admix with the humate. The source of chromium ions may be introduced as a solid or in a fluid form such as a concentrated solution. The particular form of the chromium ion source is not believed to affect the operability of the present invention. The source of chromium ions can comprise substantially any source of solubilizable chromium, for example, chromate and dichromate salts of monovalent and divalent metals or transition metals and the like. Such compounds can comprise, for example, sodium or potassium chromate or dichromate, calcium or magnesium chromate or dichromate, mixtures thereof or the like. A surprising fact we have discovered is that humate can be derivatized to form an organo-chromium complex by reaction of the humate and a chromium ion source, and that the complex so formed contains substantially no chromium in the hexavalent state. If the chromium ions in the source are in the hexavalent state, portions of the hexavalent ions are reduced during the complexing reaction to the environmentally more acceptable trivalent state as a constituent of the derivatized composition.

The source of chromium ions is mixed with the humate in an amount sufficient to provide a chromium content

0191558

of from about 1/2 to in excess of about 15 percent by weight of the derivatized composition on a moisture-free basis. It is to be understood that larger quantities of the chromium ions may be present, but current economics and the performance characteristics of the composition make the lower concentrations desirable. Preferably, the derivatized composition has a chromium content of from about 1 to about 10 percent by weight and most preferably, of from about 2 to about 5 percent by weight of the composition on a moisture-free basis.

The reaction can be effected over a wide pH range. The reaction can be effected at the natural pH of the humate, which is about pH 3.5, to a pH of about 13. It has been discovered that performance of the derivatization reaction at a pH of from about 5 to about 10 and, preferably from about 6 to about 9, appears to facilitate in some way the derivatization reaction.

The pH of the humate-containing slurry in the reaction vessel can be adjusted with substantially any alkaline agent. Preferably, an alkali or alkaline earth oxide, or hydroxide, is utilized as the alkaline agent when pH adjustment is desired. The alkaline agent generally can be added as a solid or as a fluid, such as an aqueous solution, without variation in its effectiveness.

When a small quantity of an alkaline agent such as mentioned above is admixed with the humate-containing slurry, the humate material is caused to substantially dissolve or form a solution or dispersion which substantially facilitates handling of the humate material and its treatment during the reaction. Generally, in excess of about 85 percent of the solids in the humate-containing slurry will dissolve upon addition of the alkaline agent and very often in excess of about 95 percent will dissolve.

The reaction between the humate and the solubilized source of chromium ions is effected over a period of a few minutes to in excess of over 24 hours. Preferably, the constituents are maintained under reaction conditions for from about 5 minutes to about 12 hours and, most preferably, from about 15 minutes to about 4 hours. The greater the quantity of chromium ions that are to be complexed with the humate, the greater the reaction time necessary to effect a substantially complete reaction between the constituents. The reaction can be effected under substantially any time period, however, and derivatization of at least a portion of the humate present in the reaction vessel will occur. The presence of uncomplexed chromium ions in the final reacted product appears to have no detrimental effects upon the usefulness of the additive in drilling fluids.

The derivatization reaction can be effected at substantially any temperature, such as, for example, from about ambient temperature to a temperature in excess of the atmospheric pressure boiling point of the solubilizing agent. Performance of the reaction at a temperature in excess of the atmospheric pressure boiling point requires the reaction to be performed at above atmospheric pressure whereby the solubilizing agent is maintained in a liquid condition. It has been discovered that when the reaction is effected at an elevated temperature, the reaction will progress at a faster rate toward complete conversion than at lower temperature levels. The reaction temperature, preferably, is maintained at a level below the decomposition temperature of the reactants. However, for ease of preparation, and economic considerations, reaction conditions of from about 60°F to about 300°F. (15° to 149°C) are preferred.

The derivatized humate is removed from the reaction vessel in solubilized form and then, for handling convenience, may be dried by any conventional means such as, for example, solarization or by spray drying or the like. The dried derivatized humate composition of the present invention has been found to be a free-flowing particulate when produced by spray drying or ground to desired particle size below about 10 mesh U.S. sieve (2.0mm aperture). The composition may have some moisture content and still remain a free-flowing solid. Normally, the composition will be dried to a moisture content of from about 1 to about 40 percent and, preferably, to a moisture content of from about 5 to about 25 percent. The dried product, then, may be packaged in containers to further facilitate handling.

The method of the invention is carried out by dispersing the derivatised humate in a viscosity reducing or controlling proportion in an aqueous drilling fluid, such as an aqueous suspension of a clay material which may, if desired, also contain a weighting agent, such as barite. Filtrate fluid loss control likewise is achieved by dispersing a fluid loss controlling proportion of the derivatized humate in an aqueous drilling fluid. Dispersion or dissolution may be carried out employing conventional mixing and agitating equipment employed conventionally for dispersing additives in drilling mud compositions. The proportion of derivatized humate dispersed in the drilling mud may be varied over a wide range, that is, from about 0.05% to in excess of about 10% weight by volume of the drilling fluid. The derivatized humate dissolves or disperses upon admixing with the drilling mud to form a high temperature stable drilling fluid suitable for use in well bores having temperatures in excess of 300°F. (149°C).

It will be appreciated by those skilled in the art that specific proportions employed may depend upon conditions encountered in the drilling of the well and may be varied. For example, as the drilling of the bore or well progresses and becomes deeper, temperatures in the well will increase, requiring different proportions of the additive. Further, if the drilling fluid becomes contaminated during drilling of the well, more additive may be required to counteract the effects of the contamination. Clearly, the specific proportion of additive may be varied over a wide range depending upon the drilling conditions. It can be stated however that normally the proportion will be within the range of from about 0.5 to about 25 pounds per barrel (ppb) (1.4 to 70 $kg/m^3$), preferably, from about 1 to about 20 ppb (2.8 to 56 $kg/m^3$) and, most preferably, from about 5 to about 20 ppb (14.0 to 56 $kg/m^3$) of drilling fluid. The term "barrel" as used herein refers to a barrel of 42 standard U.S. gallons (159 $dm^3$).

It also will be appreciated by those skilled in the art that the derivatization reaction hereinbefore described can be effected in situ in a drilling fluid. In this embodiment of the invention, the humate separated from association with titanium mineral deposits is admixed in an appropriate amount as previously described with a drilling fluid together with a solubilizable source of chromium ions. The chromium ion source then reacts with the humate in the drilling fluid to form the derivatized humate of the present invention. It is to be understood that this method is less desirable than that previously described because a portion of the chromium ions admixed with the drilling fluid will be lost to the clays which are present in the fluid and the like necessitating the use of larger quantities of the chromium ion source to obtain a desired chromium content in the derivatized humate and because of environmental problems associated with additions of hexavalent chromium to drilling fluids.

Although we do not wish to be bound by any particular theory of operation, it is believed that the compositional difference of the derivatized humate of the present invention over leonardite accounts for the functional advantages associated with the compositions of the present invention, in comparison to underivatized humate, leonardite, lignosulfonates or chromium lignite (chromium derivatives of leonardite) as a drilling mud thinner. The relatively high content of aluminium and titanium suggest that the chemical make-up of the humate employed in the method of the invention may include chromium complexed with organotitanium and organo-aluminum compounds which may exert some beneficial effect when present in drilling muds.

The following Examples illustrate the invention and are given by way of illustration only. The physical test data presented were obtained using procedures specified by API (American Petroleum Institute) RP 13B, "Standard Procedure for Testing Drilling Fluids".

A fann viscometer (Model No. 35A) was used to determine the apparent viscosity, plastic viscosity, yield point, 10-second gel strength and 10-minute gel strengths. Commercailly available drilling mud testing equipment was used for the API filtrate and high temperature/high pressure filtrate determinations. The amounts of additives in the Examples are on a moisture-free basis.

In the Examples, reference is made to the accompanying drawings, in which:

Figure 1 is a graphical illustration of the thermal stability of the compositions of the present invention as determined by Thermal Gravimetric Analysis in a nitrogen atmosphere in comparison to other commercial products.

Figure 2 is a graphical illustration of the results of tests conducted upon the composition of the present invention in a high temperature and pressure consistometer.

0191558

## Example I

### Laboratory Preparation of Chromium Derivative of Humate at Elevated Temperature Conditions

Fifty (50) grams of humate slurry (20-25% solids, dry basis) were diluted with fifty (50) milliliters of deionized water. The mixture was then stirred with a Hamilton Beach mixer at low speed for approximately 30 minutes to form a homogeneous humate slurry. The homogeneous slurry was then transferred to a magnetic-type stirrer. If caustic soda addition was necessary, sufficient 1 Normal sodium hydroxide then was admixed with the slurry to adjust the pH to any desired level. After the pH was adjusted, the appropriate amount of a suitable chromium source was added (sodium dichromate: $Na_2Cr_2O_7 \cdot 2H_2O$ was used for these syntheses). The pH of the mixture was then adjusted to the initially adjusted pH with 1 N sodium hydroxide. The mixture was then stirred for 30 minutes. The preceding admixtures were prepared in glass containers. The stirred mixture, then was transferred to a metal or glass-lined pressure cell and pressurized to approximately 300 pounds per square inch (2.1MPa) with nitrogen. The cell then was static-aged at 300°F. (149°C) for 16 hours. Thereafter, the cell was cooled to ambient temperature, and the pressure released. The sample was transferred to an appropriate glass container and then dried to constant weight in a drying oven. The dried sample, then was ground to a particle size less than 10 mesh.

To determine if any chromium was being leached from the cell, some of the reactions were carried out in glass-lined pressure cells. Reactions were also performed without pH adjustment.

The dried products were analyzed for total chromium content and for hexavalent chromium. The difference between the total chromium content and the hexavalent chromium is considered to equal the trivalent chromium content of the derivatized humate reaction product. The results for the syntheses are summarized in Table 1 below.

TABLE 1

Synthesis of Chromium Derivatives of Humate

| Sample No. | Reaction Condition | Initial Adjusted pH | pH After Reaction | Calculated Percent Chromium Added | Total Cr, Weight Percent | $Cr^{+6}$, Weight Percent | $Cr^{+3}$, Weight Percent |
|---|---|---|---|---|---|---|---|
| 1 | Glass-lined cell | 8.0 | 6.75 | 3 | 2.95 | <0.05 | 2.90 |
| 2 | Glass-lined cell | 3.5 | 5.2 | 3 | 3.03 | 0 | 3.03 |
| 3 | Unlined cell | 8.0 | 6.5 | 3 | 2.95 | <0.05 | 2.90 |
| 4 | Glass-lined cell | 8.0 | 7.35 | 5 | 4.21 | <0.05 | 4.16 |
| 5 | Glass-lined cell | 3.5 | 5.70 | 5 | 5.36 | 0 | 5.36 |
| 6 | Unlined cell | 8.0 | 7.1 | 5 | 5.23 | <0.05 | 5.18 |
| 7 | Glass-lined cell | 8.0 | 9.3 | 10 | 9.21 | <0.05 | 9.16 |
| 8 | Glass-lined cell | 3.5 | 6.4 | 10 | 10.57 | <0.05 | 10.52 |
| 9 | Unlined cell | 8.0 | 9.5 | 10 | 9.80 | <0.05 | 9.75 |

The foregoing data clearly illustrate that the derivatization reaction progresses substantially to completion at elevated temperatures and that the chromium ion source is not lost to the vessel during the reaction process.

0191558

## Example II

### Laboratory Preparation of Chromium Derivative
### of Humate at Low Temperature Reaction Conditions

Fifty (50) grams of humate slurry (20-25% solids, dry basis) were diluted with fifty (50) milliliters of deionized water. The mixture was then stirred with a Hamilton Beach mixer at low speed for approximately 30 minutes to form a homogeneous humate slurry. If caustic soda addition was necessary, sufficient 1 N sodium hydroxide then was admixed with the slurry to adjust the pH to any desired level. After the pH was adjusted, the appropriate amount of a suitable chromium source was added (sodium dichromate: $Na_2Cr_2O_7 \cdot 2H_2O$ was used for these syntheses). The pH of the mixture was then adjusted to the initially adjusted pH with an additional quantity of 1 N sodium hydroxide. The mixture was then stirred for 20 minutes, transferred to a drying oven and dried to constant weight. The dried product then was ground to a particle size less than 10 mesh. The dried ground product was analyzed for total chromium and hexavalent chromium. The results for the syntheses are summarized in Table 2 below.

## TABLE 2

### Low Temperature Synthesis of Chromium Humate

| Sample No. | Initial Adjusted pH | pH After Reaction | Calculated Percent Chromium Added | Total Cr, Weight Percent | $Cr^{+6}$, Weight Percent | $Cr^{+3}$, Weight Percent |
|---|---|---|---|---|---|---|
| 1 | 3.5 | 4.4 | 3 | 2.92 | 0.48 | 2.44 |
| 2 | 7.0 | | 3 | 2.98 | 0.03 | 2.95 |
| 3 | 10.0 | | 3 | 2.79 | 0.08 | 2.71 |
| 4 | 3.5 | 4.4 | 5 | 6.06 | 2.33 | 3.73 |
| 5 | 7.0 | | 5 | 4.83 | 0.23 | 4.60 |
| 6 | 10.0 | | 5 | 4.54 | 0.81 | 3.73 |
| 7 | 3.5 | 4.4 | 10 | 9.65 | 4.89 | 4.76 |
| 8 | 7.0 | | 10 | 9.35 | 4.37 | 4.98 |
| 9 | 10.0 | | 10 | 8.67 | 6.68 | 1.99 |

The foregoing data in Tables 1 and 2 clearling illustrate that substantial derivatization generally takes place whether the reaction is conducted at 300°F. (149°C) for 16 hours or at ambient temperature for 20 minutes. The elevated temperature syntheses and extended reaction times permitted almost 100% reduction of the chromium ion source to trivalent chromium. At ambient temperature, the hexavalent chromium concentration increased as the amount of derivatizing additive was increased. The pH appears to have a more pronounced effect upon the derivatization reaction at low temperatures than at elevated temperatures. A pH level of about 7 appears to facilitate reduction to trivalent chromium.

Example III

Determination of Operable pH Range

The syntheses in Example II were repeated at various pH conditions to determine the operable pH range of the derivatization reaction. The results for the syntheses are summarized in Table 3 below.

TABLE 3

Effect of pH on Derivatization of Humate

| Sample No. | Calculated Chromium Weight Percent | pH of Initial Reaction | Unconverted $Cr^{+6}$ Derivatized Product, Weight Percent |
|---|---|---|---|
| 1 | 3 | 5.0 | 0.34 |
| 2 | 3 | 6.0 | 0.09 |
| 3 | 3 | 7.0 | 0.01 |
| 4 | 3 | 8.0 | 0.01 |
| 5 | 3 | 9.0 | 0.02 |
| 6 | 5 | 5.0 | 0.74 |
| 7 | 5 | 6.0 | 0.32 |
| 8 | 5 | 7.0 | 0.09 |
| 9 | 5 | 8.0 | 0.10 |
| 10 | 5 | 9.0 | 0.21 |
| 11 | 10 | 5.0 | 2.95 |
| 12 | 10 | 6.0 | 2.20 |
| 13 | 10 | 7.0 | 2.06 |
| 14 | 10 | 8.0 | 2.95 |
| 15 | 10 | 9.0 | 3.79 |

The foregoing results indicate that derivatives produced with 3 and 5% chromium result in substantial conversion of hexavalent chromium to trivalent chromium when maintained at a pH of about 7. At 10% chromium addition, a pH of about 6-7 appears to result in a higher percentage of conversion than at higher or lower pH conditions.


Example IV

To illustrate the utility of the composition of the present invention, the following tests were performed. An unweighted base mud was prepared as follows:


The base mud formulation was:

|  | Equivalent concentration, | |
|---|---|---|
|  | (ppb) | (kg/m³) |
| 14.54 liters distilled water | - | - |
| 36.14 g sodium chloride | 0.87 | 2.4 |
| 72.70 g calcium carbonate | 1.75 | 4.9 |
| 415.45 g Dixie Bond clay | 10.00 | 28.0 |
| 1038.63 g IMCO Gel additive | 25.00 | 70.0 |
| 872.45 g IMCO Klay additive | 21.00 | 58.8 |

The salt and calcium carbonate were added to the water and stirred with a suitable stirrer at about 300-1000 rpm for about 20 minutes. The clays were sprinkled into the stirred mixture in the order given above over 60 minutes. The entire batch then was stirred for about 2 hours more. The mud then was aged for at least 72 hours at ambient temperature.

In weighting up, the following additions were made:

|  | Equivalent concentration, | |
|---|---|---|
|  | (ppb) | (kg/m³) |
| 3.0 liters distilled water | - | - |
| 166.2 g sodium hydroxide | 4.0 | 11.2 |
| 7810.5 g barite | 188.0 | 526.4 |
| 42.0 g North Dakota Leonardite | 1.0 | 2.8 |

Gypsum and sodium chloride were then added as contaminants in the following proportions to simulate highly contaminated drilling fluid.

|  | Equivalent concentration, | |
|---|---|---|
|  | (ppb) | (kg/m³) |
| 83.1 g gypsum | 2.0 | 5.6 |
| 207.7 g sodium chloride | 5.0 | 14.0 |

The final drilling fluid formulation had a weight of about 11.6 pounds per gallon (1.39 g/cm³).

The base mud was rehomogenized by stirring before portions were taken for treatment with additives in the following procedure:

A portion of the base mud prepared as above was charged to each of five appropriate mixing vessels, identified by the symbols A through E. No additive was admixed with the fluid in Vessel A which serves as a control. To Vessel B, there was added a commercial North Dakota leonardite drilling mud additive. To Vessel C there was added humate obtained from the rutile sand deposits in the vicinity of Green Cove Springs, Florida. To Vessel D was added a commercial chrome lignite sold by Magcobar under the trademark XP-20. To Vessel E is added the derivatized humate of the present invention. The derivatized humate had a calculated chromium content of about 5.3% by weight of moisture-free solids.

Each sample of the base mud was stirred in a standard Hamilton Beach mixer for approximately 10 minutes. The respective additive was slowly admixed with each sample in an amount to provide a concentration of 4 ppb or 6 ppb (11.2 or 16.8) kg/m³), depending upon the test series, during mixing and the mixing then was continued for a total of about 20 minutes. Thereafter, the physical data set forth in the following Tables 4 and 5 were determined in accordance with the API procedures. The samples then were subjected to hot rolling for 16 hours at a temperature of about 150°F (66°C) in a roller oven, then cooled to ambient temperature, stirred and the properties measured. The samples then were pressurized with nitrogen to about 300 psi (2.1 MPa), heated to 300°F (149°C) under static conditions for 16 hours. The samples then were cooled to ambient temperature, the pressure released, stirred and the properties were measured. The physical data set forth in Tables 4 and 5 below.

TABLE 4

Additive Concentration: 4ppb (11.4 kg/m³)

| | Vessel A (Control, No Additive) | | Vessel B (N. Dakota Leonardite) | | Vessel C (Humate) | | Vessel D (XP-20, Cr: 2.1%) | | | Vessel E (Composition of the present invention, Cr: 5.3%) | | |
|---|---|---|---|---|---|---|---|---|---|---|---|---|
| | Initial | HR | Initial | HR | Initial | HR | Initial | HR | SA | Initial | HR | SA |
| pH | 11.7 | 11.2 | 11.1 | 10.1 | 11.0 | 10.9 | 11.4 | 11.1 | 10.8 | 11.0 | 10.7 | 10.5 |
| 600 rpm | 49.0 | 80.0 | 30.0 | 38.0 | 32.0 | 50.0 | 31.0 | 42.0 | 45.0 | 32.0 | 32.0 | 29.0 |
| 300 rpm | 38.0 | 68.0 | 16.0 | 25.0 | 21.0 | 32.0 | 17.0 | 24.0 | 26.0 | 17.0 | 15.0 | 15.0 |
| AV, cp | 24.5 | 40.0 | 15.0 | 19.0 | 16.0 | 25.0 | 15.5 | 21.0 | 42.5 | 16.0 | 16.0 | 14.5 |
| PV, cp | 11.0 | 12.0 | 14.0 | 13.0 | 11.0 | 18.0 | 14.0 | 18.0 | 19.0 | 15.0 | 17.0 | 14.0 |
| YP, lb /100 ft² | 27.0 | 56.0 | 2.0 | 12.0 | 10.0 | 14.0 | 3.0 | 6.0 | 7.0 | 2.0 | 0.0 | 1.0 |
| 10 sec. gel, lb/100 ft² | 21.0 | 48.0 | 4.0 | 14.0 | 20.0 | 23.0 | 4.0 | 10.0 | 8.0 | 3.0 | 1.0 | 1.0 |
| 10 min. gel, lb/100 ft² | 24.0 | 60.0 | 23.0 | 28.0 | 39.0 | 32.0 | 19.0 | 43.0 | 67.0 | 41.0 | 4.0 | 15.0 |

HR: Hot rolled 16 hours, 150°F (66°C)
SA: Static aged 16 hours, 300°F (149°C), 300 psi (2.1 MPa) with nitrogen, initial pressure
AV: Apparent viscosity
PV: Plastic viscosity
YP: Yield point

- 24 -

0191558

The control sample in Table 4 exhibited high gel strengths and yield point, which increased further after the hot rolling. The static aged control sample could not be returned to a fluid state by stirring. The samples containing underivatized humate and North Dakota Leonardite exhibited lower yield point and gel strengths initially; however, the physical properties increased after hot rolling. Neither sample could be returned to a fluid state by stirring after static aging. The sample containing XP-20 exhibited generally lower initial values for the various physical properties; however, the values increased substantially after hot rolling and still more after static aging. By way of contrast, the composition of the present invention not only reduced the initial gel strengths and yield point in comparison to the control, but also exhibited good hot rolled and static aged properties.

TABLE 5

Additive Concentration: 6ppb (17.0 kg/m$^3$)

| | Vessel A (Control, No Additive) | | Vessel B (N. Dakota Leonardite) | | Vessel D (XP-20, Cr: 2.1%) | | | Vessel E (Composition of the present invention, Cr: 5.3%) | | |
|---|---|---|---|---|---|---|---|---|---|---|
| | Initial | HR | Initial | HR | Initial | HR | SA | Initial | HR | SA |
| pH | 11.7 | 11.2 | 10.5 | 9.9 | 11.4 | 11.1 | 10.8 | 10.8 | 10.6 | 10.3 |
| 600 rpm | 49.0 | 80.0 | 33.0 | 42.0 | 35.0 | 34.0 | 60.0 | 38.0 | 37.0 | 28.0 |
| 300 rpm | 38.0 | 68.0 | 17.0 | 27.0 | 19.0 | 17.0 | 37.0 | 22.0 | 17.0 | 14.0 |
| AV, cp | 24.5 | 40.0 | 16.5 | 21.0 | 17.5 | 17.0 | 30.0 | 19.0 | 18.5 | 14.0 |
| PV, cp | 11.0 | 12.0 | 16.0 | 15.0 | 16.0 | 17.0 | 23.0 | 16.0 | 20.0 | 14.0 |
| YP, lb/100 ft$^2$ | 27.0 | 56.0 | 1.0 | 12.0 | 3.0 | 0.0 | 14.0 | 6.0 | 0.0 | 0.0 |
| 10 sec. gel, lb/100 ft$^2$ | 21.0 | 48.0 | 1.0 | 14.0 | 3.0 | 1.0 | 17.0 | 7.0 | 1.0 | 1.0 |
| 10 min. gel, lb/100 ft$^2$ | 24.0 | 60.0 | 25.0 | 34.0 | 23.0 | 18.0 | 60.0 | 50.0 | 1.0 | 1.0 |

HR: Hot rolled 16 hours, 150°F (66°C)
SA: Static aged 16 hours, 300°F (149°C), 300 psi (2.1 MPa) initial nitrogen
AV: Apparent viscosity
PV: Plastic viscosity
YP: Yield point

0191558

The additives employed at a 6 ppb concentrate in Table 5 in comparison to the 4 ppb concentration of Table 4 exhibited properties generally similar to those previously described. The sample containing the composition of the present invention decreased the gel strengths and yield point dramatically after hot rolling and static aging. Clearly, the performance of the composition of the present invention is superior to the available conventional additives.

The results set forth in Tables 4 and 5 clearly illustrate the beneficial results derived from use of the composition of the present invention as an additive in a drilling fluid in comparison to other conventional additives. More specifically, the composition of the present invention results in superior performance in reducing the yield point and gel strengths.


EXAMPLE V

A base mud is prepared as in Example IV having the following final composition:


```
  15.4   liters distilled water
  36.0   g sodium chloride
  73.0   g calcium carbonate
 415.0   g Dixie Bond clay
 830.0   g IMCO Gel additive
 830.0   g IMCO Klay additive
7800.0   g barite
         pH adjusted with sodium hydroxide to 9.8
```

The samples then were admixed with a sufficient quantity of the additives specified in the following Table 6 to provide a concentration of 1 ppb (2.8 kg/m$^3$) and 5 ppb
(14.0 kg/m$^3$) and the physical properties were determined
as previously indicated.  The results are set forth in
Table 6 below.

TABLE 6

| | Vessel A (Control, no Additive) | | | Additive Concentration: 5 ppb (14 kg/m³) | | | | | | Additive Concentration: 1 ppb (2.8 kg/m³) | | | | | |
| --- | --- | --- | --- | --- | --- | --- | --- | --- | --- | --- | --- | --- | --- | --- | --- |
| | | | | Vessel B (XP-20, Cr: 2.10%) | | | Vessel C (Composition of the present invention Cr: 1.0%) | | | Vessel D (XP-20 Cr=2.10%) | | | Vessel E (Composition of the present invention Cr: 1.0%) | | |
| | Initial | HR | SA | Initial | HR | SA | Initial | HR | SA | Initial | HR | SA | Initial | HR | SA |
| pH | 10.5 | 9.9 | 8.2 | NA | 8.5 | 8.1 | 9.6 | 9.0 | 8.0 | 9.9 | 9.2 | 7.9 | 9.7 | 9.1 | 8.3 |
| 600 rpm | 65.0 | 57.0 | 83.0 | 40.0 | 43.0 | 63.0 | 41.0 | 43.0 | 43.0 | 38.0 | 38.0 | 50.0 | 36.0 | 40.0 | 38.0 |
| 300 rpm | 50.0 | 35.0 | 61.0 | 23.0 | 24.0 | 36.0 | 22.0 | 22.0 | 22.0 | 16.5 | 16.0 | 11.5 | 17.0 | 18.0 | 13.0 |
| AV, cp | 32.5 | 28.5 | 41.5 | 20.0 | 21.5 | 31.5 | 20.5 | 21.5 | 21.5 | 21.5 | 22.0 | 38.5 | 19.0 | 22.0 | 25.0 |
| PV, cp | 15.0 | 22.0 | 22.0 | 17.0 | 19.0 | 27.0 | 19.0 | 21.0 | 21.0 | 19.0 | 19.0 | 25.0 | 18.0 | 20.0 | 19.0 |
| YP, lb/100 ft² | 35.0 | 13.0 | 39.0 | 6.0 | 5.0 | 9.0 | 3.0 | 1.0 | 1.0 | 5.0 | 6.0 | 27.0 | 2.0 | 4.0 | 12.0 |
| 10 sec. gel, lb/100 ft² | 48.0 | 4.0 | 21.0 | 2.0 | 1.0 | 4.0 | 1.0 | 2.0 | 1.0 | 2.0 | 2.0 | 23.0 | 1.0 | 2.0 | 4.0 |
| 10 min. gel, lb/100 ft² | 114.0 | 35.0 | 57.0 | 20.0 | 3.0 | 31.0 | 3.0 | 1.0 | 2.0 | 38.0 | 9.0 | 54.0 | 8.0 | 3.0 | 32.0 |
| API, ml, 30 min. | – | 7.2 | 10.3 | – | 6.6 | 8.1 | – | 5.2 | 7.4 | – | 8.2 | 8.4 | – | 7.0 | 8.6 |
| HTHP, ml 300°F, 500 psi (Δp) | – | – | 35.6 | – | – | 25.2 | – | – | 18.5 | – | – | – | – | – | 38.6 |
| Shear Strength, (lb/100 ft²) | – | – | 145.0 | – | – | 130.0 | – | – | 30.0 | – | – | 110.0 | – | – | 70.0 |

HR: Hot rolled 16 hours, 150°F (66°C)
SA: Static aged 16 hours, 350°F (177°C), 300 psi (2.1 MPa) with nitrogen, initial pressure
AV: Apparent viscosity
PV: Plastic viscosity
YP: Yield point
API: Filtrate test at room temperature
HTHP: High temperature/high pressure filtration test, 300°F, 500 psi

The results set forth in Table 6 clearly illustrate the beneficial results derived from use of the composition of the present invention as an additive in a drilling fluid in comparison to other conventional additives. More specifically, the composition of the present invention results in reduced gel strengths and yield point in comparison to the control and another conventional additive. The physical properties of the control sample indicate it has experienced temperature related thickening. The effectiveness of the composition of the present invention is clearly demonstrated by the decreased values of the physical properties resulting from treatment with only 1 ppb (2.8 kg/m³) of the derivatized humate additive. Hot rolling the sample containing the composition of the present invention resulted in little change in the values of the rheological properties of the sample from the initial values. This result demonstrates that the additive is immediately effective and is not dependent upon reaction time with the drilling fluid or fluid temperature to produce the desired effects upon the physical properties of the drilling fluid. The drilling fluid sample treated with XP-20 improved the rheological properties of the sample when compared to the control but did not improve those properties as well as an equal quantity of the composition of the present invention. It should be noted that the derivatized composition of the invention in the case of this example contained only 1% chromium which is less than one half the chromium content of the XP-20. Such results clearly

- 30 -

0191558

illustrate the superiority of the chromium derivative of the present invention.

### EXAMPLE VI

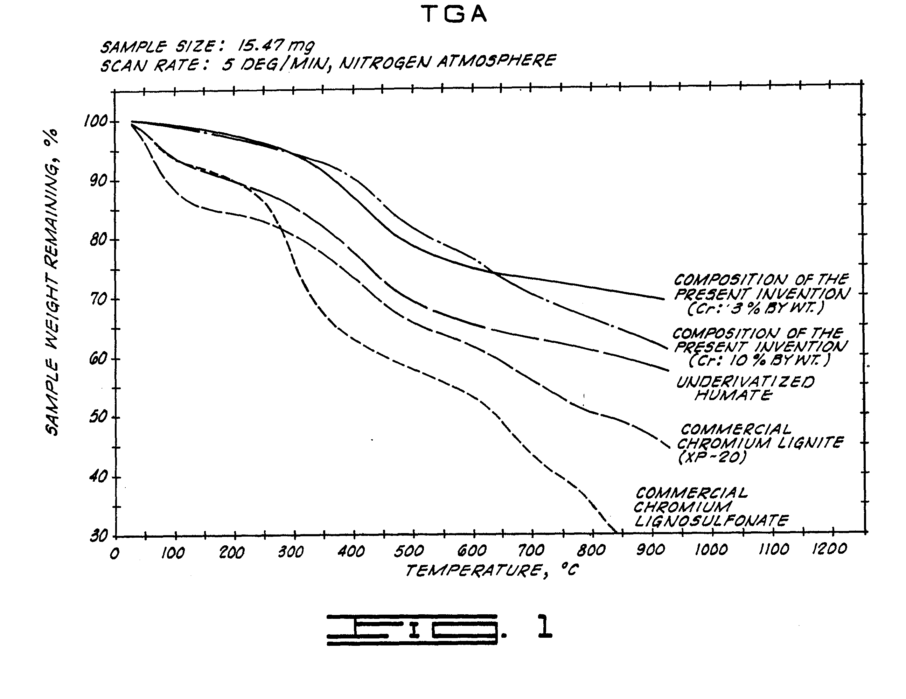

To illustrate the thermal stability of the composition of the present invention in comparison to other conventional products, thermal gravimetric analyses of several of the compounds were performed in a nitrogen atmosphere to simulate downhole conditions. The analyses were performed using a Du Pont Instrument, Model 1090 Thermal Analyzer in accordance with the operating manual for the equipment. The results are set forth in Figure 1. The figure clearly illustrates the greater thermal stability of the derivatized product of the present invention in comparison to underivatized humate, chromium lignosulfonate and chromium lignite (XP-20).

### Example VII

To illustrate the stability of the composition of the present invention to cyclic temperature variation which would simulate actual operating conditions of a drilling fluid, the following tests were performed.

A sample of drilling fluid was admixed with a quantity of the derivatized humate sufficient to provide a concentration of about 10 ppb ($28.4$ kg/m$^3$). The sample then was placed in a Fann consistometer. The Fann Instruments Consistometer (Model 5S-TDL) is designed to test drilling fluids under elevated temperature and high pressures such as are encountered in deep drilling. After the fluid is placed in the test chamber, the initial hydraulic pressure is set to 1000 psi (6.9 MPa). Pressure increases significantly as temperature is increased during a test.

In the performance of a test, the thickness of the fluid sample is initially determined at ambient temperature under the initial confining hydraulic pressure. The instrument presents data as "consistency units" (c.u.). The higher the c.u. value, the thicker the fluid. Generally, in testing aqueous drilling fluids, the sample is heated to about 300°F, (149°C), while observing the changing c.u. values with time and temperature.

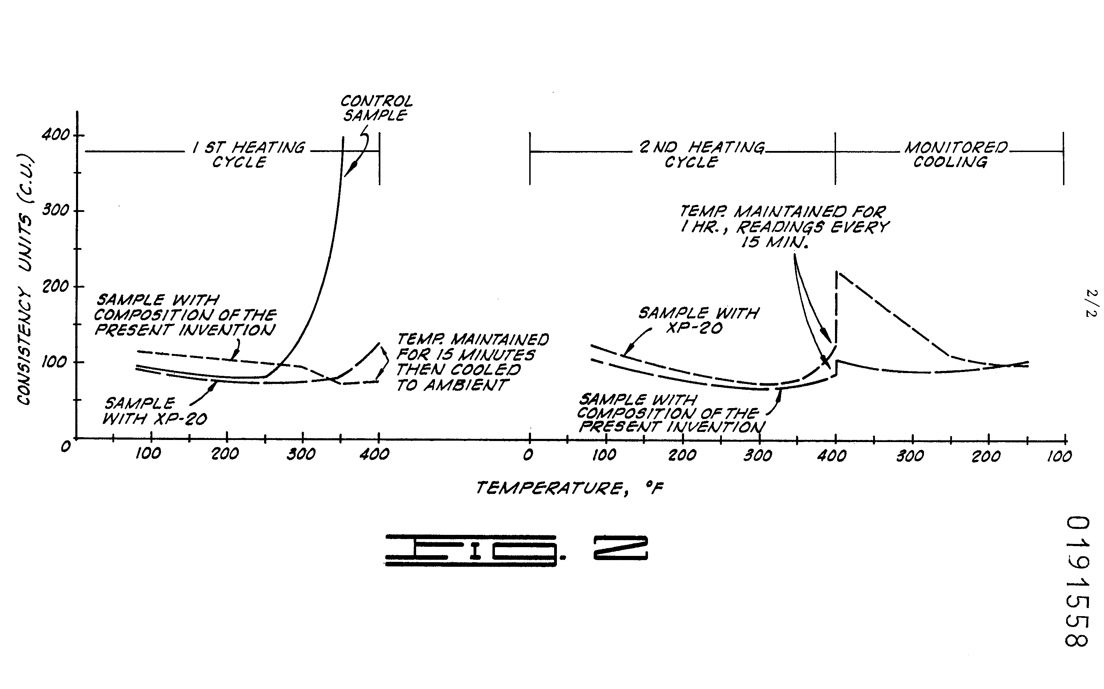

As field data had shown that the test fluid to be employed in the present test was unstable at 400°F (204°C), this was selected as the test temperature to evaluate the effects of the chromium derivative of the present invention in comparison to chromium lignite (XP-20). Data are shown in Figure 2 and Table 7.

The drilling fluid sample was received from a deep well in southern Mississippi. At that point in the drilling of the well, bottom-hole temperatures were near 400°F (204°C). The rheological properties of the fluid sample received in the laboratory from the well were as follows after 5% dilution with deionized water and 1 ppb ($2.8 \ kg/m^3$) NaOH addition.

## Rheological Properties

| | |
|---|---|
| Weight, ppg | 13.6 |
| 600 rpm | 49 |
| 300 rpm | 25 |
| PV, cps | 24 |
| YP, #/100 ft$^2$ | 1 |
| 10 sec. gel | 3 |
| 10 min. gel | 12 |
| pH | 11.1 |
| API filtrate, ml. | 3.9 |
| HTHP filtrate, ml | 22.2 |
| Pf | 1.0 |
| Mf | 3.8 |
| Pm | 4.8 |
| Cl$^-$ mg/l (chlorides) | 10,000 |
| Ca$^{++}$, mg/l (calcium) | Trace |
| % solids | 21 |
| % oil | 2 |
| % water | 77 |
| MBT, ppb | 26.25 |

The above sample was split into three portions. To one portion, 10 ppb (28.4 kg/m$^3$) of the derivatized humate of the present invention containing about 3% Cr was added. Another portion was prepared with 10 ppb (28.4 kg/m$^3$) of the commercially available chromium-lignite (XP-20). A third portion was prepared as a control, with no additive. Each was hot-rolled for 16 hours at 150°F (66°C) before testing.

Each sample then was placed in the Fann consistometer gradually heated to about 200°F (93°C), then to about 300°F (149°C), 350°F (177°C) and 400°F (204°C). Sufficient time was allowed at each temperature for the fluid to stabilize, or to demonstrate any temperature instability.

To demonstrate the stability or instability of each test sample, the test was divided into two temperature cycles. First, the sample was briefly exposed to a temperature of 400°F (204°C), cooled to ambient temperature, and then reheated in a second heating cycle to a temperature of about 400°F (204°C). The first cycle simulates a single circulation of a fluid through a well with a bottom-hole temperature (BHT) of 400°F (204°C) or more, under common drilling conditions. The second cycle demonstrates the behavior of each fluid on repeated and prolonged exposure to temperatures about 300°F (149°C), and particularly to 400°F (204°C). The extended period at 400°F (204°C) might represent, for example, a time when fluid is not circulated in the well bore due to an equipment failure.

## TABLE 7

### CONSISTOMETER DATA

#### Consistency Units, c.u.

| Temperature | | Control | Composition of the Present Invention (Cr : 3%) 10 ppb (28.4 kg/m$^3$) | XP-20 (Cr: 2.1%) 10ppb (28.4 kg/m$^3$) |
|---|---|---|---|---|
| 0°F | 0°C | First Heating Cycle | | |
| Ambient | | 96 | 114 | 92 |
| 200 | 93 | 80 | 102 | 74 |
| 250 | 121 | 81 | – | – |
| 300 | 149 | 92–138 | 95 | 77 |
| 350 | 177 | > 400 | 71 | 80 |
| 370 | 188 | | 74 | – |
| 375 | 191 | | – | 98 |
| 385 | 196 | | 76 | – |
| 400 | 204 | | 77 | 128 |
| 400 (15 min) | 204 | | 77 | 125 |
| | | Second Heating Cycle | | |
| Ambient | | | 108 | 126 |
| 200 | 93 | | – | 90 |
| 250 | 121 | | 72 | – |
| 300 | 149 | | 68 | 82 |
| 350 | 177 | | 74 | 84 |
| 400 | 204 | | 89 | 123 |
| 400 (15 min) | 204 | | 94 | 149 |
| 400 (30 min) | 204 | | 99 | 166 |
| 400 (45 min) | 204 | | 104 | 204 |
| 400 (60 min) | 204 | | 105 | 222 |
| | | Monitored Cooling | | |
| 320 | 160 | | 92 | – |
| 250 | 121 | | 94 | 110 |
| 150 | 66 | | 104 | 100 |

The control sample test illustrated in Figure 2 and Table 7 clearly demonstrates the temperature sensitivity of the field mud sample. The fluid exhibited lower c.u. values at 250°F (121°C) than at ambient temperature, but as soon as the sample temperature reached 300°F (149°C), the fluid consistency increased erratically, eventually greatly exceeding its original consistency.

As the field mud sample was cooled from 345°F (174°C) to 250°F (121°C) and then further to ambient temperature, it remained too viscous for the consistometer to measure the consistency. This phenomenon is generally referred in a fluid as "gelling-up" or "locking up".

The sample containing the chromium-derivatized humate of the present invention had an initial reading on the Fann consistometer of 114 c.u. As the sample was heated over a period of about eight hours, its consistency regularly decreased until a temperature of about 370°F (188°C) was attained. Between 370°F (188°C) and 400°F (204°C), a very minor increase in consistency was observed, with the fluid going from 71 c.u. at 350°F (177°C) to a maximum of 77 c.u. after 15 minutes at 400°F (204°C). The sample then was cooled to ambient temperature, at which it had a consistency value of only 108 c.u., which is close to its original consistency. This property of the treated fluid is desirable.

During the second heating cycle, a decrease in c.u. values occurred through a temperature of 300°F (149°C). At 350°F (177°C), the value had increased only to 74 c.u. The sample temperature was held constant at 400°F (204°C) for one hour, to observe the fluid for evidence of progressive thickening. The sample went from an initial value of 89 c.u. to 105 c.u. during the test period.

As the fluid sample cooled from the second heating cycle, the consistency values initially decreased, and then stabilized at a value near to its original consistency as it returned to ambient temperature conditions.

By way of contrast, the sample treated with XP-20 demonstrated an increase in consistency above that displayed at ambient temperature by the time it reached 375°F (191°C). During the first test period at 400°F (204°C), its consistency was significantly greater than that at ambient temperature.

Upon cooling to ambient temperature, the fluid exhibited continued high c.u. values.

During the second test at 400°F (204°C), the consistency of the sample increased still further, and very rapidly, to more than twice the original consistency.

The higher c.u. readings under downhole temperature conditions demonstrate the instability of the XP-20 treated sample. By way of contrast, the sample treated with the composition of the present invention performed satisfactorily under these conditions.

### Example VIII

To further illustrate the effectiveness of the composition of the present invention, an additional quantity of the fluid mud used in Example 7 was separated into several samples and quantities of the hereinafter identified additives were admixed at about 10 ppb ($28.4$ kg/m$^3$). The physical properties then were determined as set forth in Example IV. The results are summarized in Table 8.

TABLE 8

Additive Concentration: 10 ppb $(28.4 \text{ kg/m}^3)$

| | Vessel A (Control, no Additive) | | | Vessel B (Commercial chrome lignosulfonate, Cr: 3.5%) | | | Vessel C (Composition of the present invention Cr: 3%) | | |
|---|---|---|---|---|---|---|---|---|---|
| | Initial | HR | SA | Initial | HR | SA | Initial | HR | SA |
| pH | 12.8 | 12.6 | 9.1 | 12.3 | 11.65 | 8.7 | 12.7 | 12.7 | 9.1 |
| 600 rpm | 65.0 | 70.0 | 186.0 | 93.0 | 97.0 | 184.0 | 109.0 | 90.0 | 117.0 |
| 300 rpm | 36.0 | 38.0 | 172.0 | 58.0 | 53.0 | 134.0 | 68.0 | 53.0 | 88.0 |
| AV, cp | 32.5 | 35.0 | 93.0 | 46.5 | 48.5 | 92.0 | 54.5 | 45.0 | 58.5 |
| PV, cp | 29.0 | 32.0 | 14.0 | 35.0 | 44.0 | 60.0 | 41.0 | 37.0 | 29.0 |
| YP, lb/100 ft$^2$ | 7.0 | 6.0 | 158.0 | 13.0 | 9.0 | 64.0 | 27.0 | 8.0 | 56.0 |
| 10 sec. gel, lb/100 ft$^2$ | 1.0 | 2.0 | 120.0 | 4.0 | 3.0 | 84.0 | 5.0 | 3.0 | 69.0 |
| 10 min. gel, lb/100 ft$^2$ | 23.0 | 19.0 | 177.0 | 23.0 | 9.0 | 154.0 | 36.0 | 6.0 | 115.0 |
| API, ml, 30 minutes | – | – | 9.0 | – | 1.4 | 11.6 | – | 0.9 | 3.9 |
| HTHP, ml 300°F, 500 psi | – | – | 22.4 | – | – | 42.0 | – | – | 13.2 |
| Shear Stress | – | – | 1400.0 | – | – | 3500.0 | – | – | 700.0 |

HR: Hot rolled 16 hours, 150°F (66°C)
SA: Static aged 16 hours, 400°F (204°C), 300 psi (2.07 MPa) with nitrogen
AV: Apparent viscosity
PV: Plastic viscosity
YP: Yield point
API: Filtrate test at room temperature
HTHP: High temperature/high pressure filtration test, 300°F (149°C), 500 psi (3.4 MPa)

The results set forth in Table 8 illustrate beneficial results derived from use of the composition of the present invention as an additive in a drilling fluid in comparison to other conventional additives. More specifically, the composition of the present invention results in improvements of various properties of the fluid especially after hot rolling and static aging.

After hot rolling, the 10 minute gel strength of the sample treated with the composition of the present invention was significantly less than either that of the chromium lignosulfonate and that of the control.

The API filtrate volumes, as well as the HTHP filtrate volumes of the hot rolled samples and the static aged samples, were all controlled more effectively by the composition of the present invention than by the commercial chromium lignosulfonate.

The values obtained for shear strengths also demonstrated the superiority of the composition of the present invention to the chromium lignosulfonate. The shear strength of the sample treated with the composition of the present invention, was half that of the control sample while the chromium lignosulfonate-treated sample was more than twice the value of the control sample. Low shear strength values are highly desirable for various drilling operations, such as logging, or for reestablishing circulation after downtime.

0191558

## Example IX

To illustrate the capabilities of the composition of the present invention in stabilizing salt contaminated drilling fluids, the following tests were performed.

A low solids, nondispersed mud from the field was contaminated with 35 pounds per barrel (99 kg/m$^3$) of sodium chloride. The sodium chloride concentration of 35 ppb (99 kg/m$^3$) is quite extreme and is in excess of the levels that normally would be expected to be encountered in actual drilling fluids.

The contaminated fluid was separated into samples and the individual samples are admixed with a quantity of the additives hereinafter set forth. The physical properties were determined as previously set forth. The results are set forth in Table 9 below.

TABLE 9

Additive Concentration: 10 ppb (28.4 kg/m$^3$)

| | Vessel A (Control, no Additive) | | | Vessel B (XP-20, Cr: 2.1%) | | | Vessel C (Composition of the present invention Cr: 1%) | | |
|---|---|---|---|---|---|---|---|---|---|
| | Initial | HR | SA | Initial | HR | SA | Initial | HR | SA |
| pH | 7.8 | 10.1 | 8.9 | 7.6 | 8.7 | 8.8 | 7.9 | 8.7 | 8.7 |
| 600 rpm | 139 | 116 | 81 | 161 | 106 | 83 | 184 | 85 | 53 |
| 300 rpm | 126 | 109 | 72 | 149 | 90 | 67 | 171 | 71 | 38 |
| AV, cp | 69 | 58 | 40 | 80 | 53 | 41 | 92 | 42 | 26 |
| PV, cp | 13 | 7 | 9 | 12 | 16 | 16 | 13 | 14 | 15 |
| YP, lb/100 ft$^2$ | 113 | 102 | 63 | 137 | 74 | 51 | 158 | 57 | 23 |
| 10 sec. gel, lb/100 ft$^2$ | 58 | 45 | 46 | 62 | 47 | 31 | 63 | 36 | 8 |
| 10 min. gel, lb/100 ft$^2$ | 65 | 56 | 62 | 75 | 50 | 37 | 90 | 38 | 27 |
| API, ml, 30 minutes | | 50 | | | 25 | | | 19 | |

HR: Hot rolled 16 hours, 150°F (66°C)
SA: Static aged 16 hours, 300°F (149°C), 300 psi (2.1 MPa) with nitrogen
AV: Apparent viscosity
PV: Plastic viscosity
YP: Yield point
API filtrate test at room temperature

0191558

The results set forth in Table 9 clearly illustrate the beneficial results derived from use of the composition of the present invention as an additive in a salt-contaminated drilling fluid. The composition of the present invention results in superior performance in reducing the yield point, gel strengths and API fluid loss.

0191558

CLAIMS

1.      A method of controlling the viscosity of an aqueous drilling fluid, which comprises dispersing a viscosity-controlling amount of a derivatized humate in said aqueous drilling fluid, said humate being one which has been associated with titanium mineral deposits, and which has been derivatized with a source of chromium ions, at least a portion of the chromium ions in the derivatized humate being in the trivalent state.

2.      A method according to claim 1, wherein said derivatized humate contains from about 1/2 percent to about 15 percent chromium ions by weight on a moisture-free basis.

3.      A method according to claim 1 or 2, wherein said derivatized humate is mixed with the aqueous drilling fluid in an amount of from about 1/2 to about 25 pounds per barrel (1.4 to 70 $kg/m^3$) of the drilling fluid.

4.      A method according to claim 1,2 or 3, wherein said humate has a compositional make-up of carbon and hydrogen in a weight ratio of carbon to hydrogen of from about 9.5 to about 17.5:1.0, and oxygen in a carbon to oxygen weight ratio of about 1.0 to about 2.3:1.0.

5.      A method according to claim 1,2,3 or 4, wherein the chromium in the derivatized humate constitutes from about 1 percent to about 10 percent by weight of the derivatized humate on a moisture-free basis.

- 43 - 0191558

6. A method of preparing a derivatized humate for use in the method of claim 1, which comprises forming a mixture of a humate which has been associated with titanium mineral deposits, a solubilizing agent and a solubilizable source of chromium ions, and reacting the humate and solubilizable source of chromium ions in contact with the solubilizing agent for a sufficient time to form a derivatized humate comprising an organo-chromium complex in which at least a portion of the chromium ions in the complex are in the trivalent state.

7. A method according to claim 6, further comprising the step of mixing an alkaline agent with the humate in an amount sufficient to adjust the pH of the mixture of humate, solubilizing agent and solubilizable source of chromium ions to a pH of from about 5 to about 10.

8. A method according to claim 6 or 7, further comprising heating the mixture of humate, solubilizing agent and solubilizable source of chromium ions during said reacting, preferably to a temperature of from about 60°F to about 300°F (15°C to 149°C).

9. A method according to claim 6,7 or 8, wherein said solubilizable source of chromium ions comprises at least one of the chromate and dichromate salts of alkali metals, alkaline earth metals and transition metals.

10. A drilling fluid which includes a derivatized humate as made by the method of claim 6,7,8 or 9.

# TGA

SAMPLE SIZE: 15.47 mg
SCAN RATE: 5 DEG/MIN, NITROGEN ATMOSPHERE

COMPOSITION OF THE
PRESENT INVENTION
(Cr: 3% BY WT.)

COMPOSITION OF THE
PRESENT INVENTION
(Cr: 10% BY WT.)

UNDERIVATIZED
HUMATE

COMMERCIAL
CHROMIUM LIGNITE
(XP-20)

COMMERCIAL
CHROMIUM
LIGNOSULFONATE

*SAMPLE WEIGHT REMAINING, %* (y-axis)

*TEMPERATURE, °C* (x-axis)

FIG. 1

0191558

FIG. 2

European Patent
Office

**EUROPEAN SEARCH REPORT**

0191558

Application number

EP    86 30 0397

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,D | US-A-4 235 727  (W.C. FIRTH)<br><br>* Column 2, lines 1-25; column 5, lines 21-55; examples 1,2; claims 1-5 * | 1,3,4, 10 | C 09 K    7/02 |
| Y,D | US-A-4 311 600  (W.C. FIRTH)<br><br>* Column  2, lines 20-36; column 3, lines 47-56; column 5, lines 21-28,52-63;  column  6, lines 3-18; claims 1-3 * | 1,3,4, 10 | |
| Y | GB-A-1 276 411  (DRESSER)<br>* Page  1,  lines 22-55; page 2, lines  20-46,74-84;  column  3, lines  35-53; page 4, lines 4-21; examples; claims 1-6 * | 1,10 | |

TECHNICAL FIELDS
SEARCHED (Int. Cl.4)

C 09 K

The present search report has been drawn up for all claims

| Place of search | Date of completion of the search | Examiner |
|---|---|---|
| THE HAGUE | 06-05-1986 | BOULON A.F.J. |